# EUROPÄISCHE PATENTSCHRIFT

(11) **EP 0 853 361 B1**
(45) Veröffentlichungstag und Bekanntmachung des Hinweises auf die Patenterteilung: **14.11.2001**
(21) Anmeldenummer: 97100443.7
(22) Anmeldetag: 14.01.1997
(51) Int. Cl.: H02G 3/04

(54) **Einteiliges Hüll-Wellrohr und Verfahren zu seiner Herstellung**
One piece protection corrugated tubing and manufacturing device
Tube annelé de protection en une pièce et dispositif de fabrication

(43) Veröffentlichungstag der Anmeldung: 15.07.1998
(73) Patentinhaber: Hegler, Ralph-Peter, Dr.-Ing., 97688 Bad Kissingen (DE); Bayerische Motoren Werke Aktiengesellschaft, 80809 München (DE)
(72) Erfinder: Hegler,Ralph Peter,Dr.-Ing., 97688 Bad Kissingen (DE)
(74) Vertreter: Rau, Manfred, Dr. Dipl.-Ing.

(56) Entgegenhaltungen:
- EP-A- 0 114 213
- EP-A- 0 268 869
- DE-A- 3 405 552
- DE-B- 1 203 940

## Beschreibung

Die Erfindung betrifft ein einteiliges Hüll-Wellrohr und ein Verfahren zu seiner Herstellung. Derartige Hüll-Wellrohre werden unter anderem in der Automobilindustrie zum Schutz von elektrischen Leitungen eingesetzt.

Aus der DE 34 05 552 A1 ist ein einteiliges Hüll-Wellrohr mit in Richtung einer Achse hintereinander angeordneten, aneinander anschließenden und sich über mehr als die Hälfte ihres Umfanges erstreckenden gewellten Abschnitten bekannt, die jeweils einen äußeren Rohrbereich, einen inneren Rohrabschnitt und einen äußeren Rohrbereich mit zwei in Richtung der Achse benachbarten Rohrabschnitten verbindende Flanken und zwei einander zugewandte Enden aufweisen. An jedem Ende eines gewellten Abschnittes ist ein gewellter Teil-Abschnitt ausgebildet, der jeweils einen äußeren Teil-Rohrbereich, einen inneren Teil-Rohrabschnitt und einen Teil-Rohrbereich mit zwei in Richtung der Achse benachbarte Teil-Rohrabschnitte verbindenden Teil-Flanken aufweist. Die beiden einem gewellten Abschnitt zugeordneten gewellten Teil-Abschnitte sind radial zur Achse übereinander angeordnet und greifen ineinander. Die inneren Teil-Rohrabschnitte liegen hierbei in einer Weise aneinander an, daß Beschädigungen der im Hüll-Wellrohr angeordneten elektrischen Leitungen auftreten können.

Aus der EP 0 114 213 A (entspr. US-Patent 4 513 787) ist ein Hüll-Wellrohr aus Kunststoff mit einem seitlichen Längsschlitz bekannt, das entlang dieses Längsschlitzes mit einer die beiden Schlitzränder lösbar verbindenden Rast- bzw. Schnappverschlußeinrichtung versehen ist. Dieses Hüll-Wellrohr ist technisch problemlos herzustellen; nachteilig ist, daß das geschlossene Hüll-Wellrohr, dessen Verschlußeinrichtung also geschlossen ist, eine senkrecht zur Rohrachse verlaufende Biegevorzugsrichtung aufweist, so daß es beim Biegen geöffnet werden kann.

Aus der EP 0 291 418 A ist ein längsgeschlitztes Hüll-Wellrohr bekannt, das im Bereich seines Längsschlitzes mit radial abstehenden Stegen versehen ist, über die eine Verriegelungshülse geschoben wird. Dieses Hüll-Wellrohr ist nicht einteilig, sondern zweiteilig und demzufolge schwierig zu montieren. Es weist weiterhin senkrecht zur Rohrachse eine Biegevorzugsrichtung auf, die beim Verlegen des Rohres von Nachteil ist.

Aus der WO 94/11663 ist ein einteiliges Hüll-Wellrohr bekannt, das einen Längsschlitz aufweist. Im Bereich des Schlitzes ist der gewellte Abschnitt auf einer Seite des Schlitzes mit einem Verriegelungsvorsprung versehen, dem auf der anderen Seite des Längsschlitzes eine Verriegelungsausnehmung am gewellten Abschnitt zugeordnet ist. Die Herstellung eines solchen Hüll-Wellrohres ist sehr aufwendig, zumal die Verriegelungsteile nach der Extrusion mechanisch bearbeitet werden müssen.

Aus der EP 0 268 869 B1 ist ein zweiteiliges Hüll-Wellrohr bekannt, das aus zwei Rohrabschnitten besteht, die jeweils verjüngte gewellte Abschnitte aufweisen. Die Montage dieser beiden Rohrabschnitte ist schwierig. Nach der Montage liegen die verjüngten gewellten Abschnitte in den nicht verjüngten gewellten Abschnitten. Die Herstellung und die Montage ist aufwendig; jedoch können die Nachteile der vorstehend geschilderten geschlitzten Wellrohre hiermit vermieden werden.

Der Erfindung liegt die Aufgabe zugrunde, ein einteiliges Hüll-Wellrohr zu schaffen, das einfach aufgebaut ist und bei dem eine Beschädigung der in seinem Inneren angeordneten elektrischen Leitungen ausgeschlossen ist, und ein Verfahren zu seiner Herstellung anzugeben, das einfach durchzuführen ist.

Diese Aufgabe wird im wesentlichen dadurch gelöst, daß der innere Teil-Rohrabschnitt des radial innen angeordneten gewellten Teil-Abschnitts am Übergang des radial äußeren gewellten Teilabschnitts in den gewellten Abschnitt bündig an den inneren Rohrabschnitt des gewellten Abschnitts anschließt und daß der innere Teil-Rohrabschnitt des radial äußeren gewellten Teil-Abschnitts am Übergang zum gewellten Abschnitt gegenüber dem inneren Rohrabschnitt radial nach außen versetzt ist. Hierdurch wird vermieden, daß im Inneren des Hüll-Wellrohres scharfe Kanten auftreten, die zu einer Beschädigung der im Hüll-Wellrohr angeordneten elektrischen Leitungen führen können.

Durch die Weiterbildung nach Anspruch 2 wird sichergestellt, daß das Hüll-Wellrohr keine oder nur eine geringe Biegevorzugsrichtung aufweist. Durch die Weiterbildung nach Anspruch 3 wird erreicht, daß die übereinanderliegenden gewellten Teil-Abschnitte in Umfangsrichtung nicht auseinandergezogen werden können. Es ist also auch in Umfangsrichtung eine Verriegelung vorhanden. Diese Verriegelung wirkt auch beim Biegen des Rohres, da beim Biegen eines Rohres verhindert wird, daß die ineinandergreifenden gewellten Teil-Abschnitte in Umfangsrichtung auseinandergezogen werden. Durch die Weiterbildung nach Anspruch 4 wird erreicht, daß das Wellrohr auch außen keine Vorsprünge oder scharfe Kanten aufweist.

Die der Erfindung zugrundeliegende Aufgabe wird bei einem Verfahren durch die Merkmale des Anspruches 6 gelöst. Durch Anspruch 7 wird hierbei erreicht, daß die gewellten Teil-Abschnitte eine reduzierte Wandstärke haben.

Weitere Vorteile und Merkmale der Erfindung ergeben sich aus der nachfolgenden Beschreibung eines Ausführungsbeispieles der Erfindung anhand der Zeichnung. Es zeigt
- Fig. 1: ein ein Zwischenprodukt bildendes Wellrohr in einer Seiten-Längs-Ansicht,
- Fig. 2: einen Querschnitt durch das Wellrohr entsprechend der Schnittlinie II-II in Fig. 1,
- Fig. 3: einen Querschnitt durch das Wellrohr entsprechend der Schnittlinie III-III in Fig. 2,
- Fig. 4: einen Querschnitt durch das Wellrohr entsprechend der Schnittlinie IV-IV in Fig. 2,
- Fig. 5: einen Querschnitt durch das Wellrohr entsprechend der Schnittlinie V-V- in Fig. 2,
- Fig. 6: einen Querschnitt durch das Wellrohr entsprechend der Schnittlinie VI-VI in Fig. 2,
- Fig. 7: das Wellrohr in fertig montiertem Zustand in einer Seiten-Längsansicht,
- Fig. 8: einen Querschnitt durch das Wellrohr gemäß der Schnittlinie VIII-VIII in Fig. 7,
- Fig. 9: einen Querschnitt durch das Wellrohr entsprechend der Schnittlinie IX-IX in Fig. 8,
- Fig. 10: eine Anlage zur Herstellung eines Wellrohres nach den Fig. 1 bis 9,
- Fig. 11: einen Schnitt durch die Extrusionsdüse eines Extruders entsprechend der Schnittlinie XI-XI in Fig. 10,
- Fig. 12: einen Schnitt durch eine Abzugsvorrichtung gemäß der Schnittlinie XII in Fig. 10 und
- Fig. 13: einen Schnitt durch eine Nachform-Vorrichtung gemäß der Schnittlinie XIII-XIII in Fig. 10.

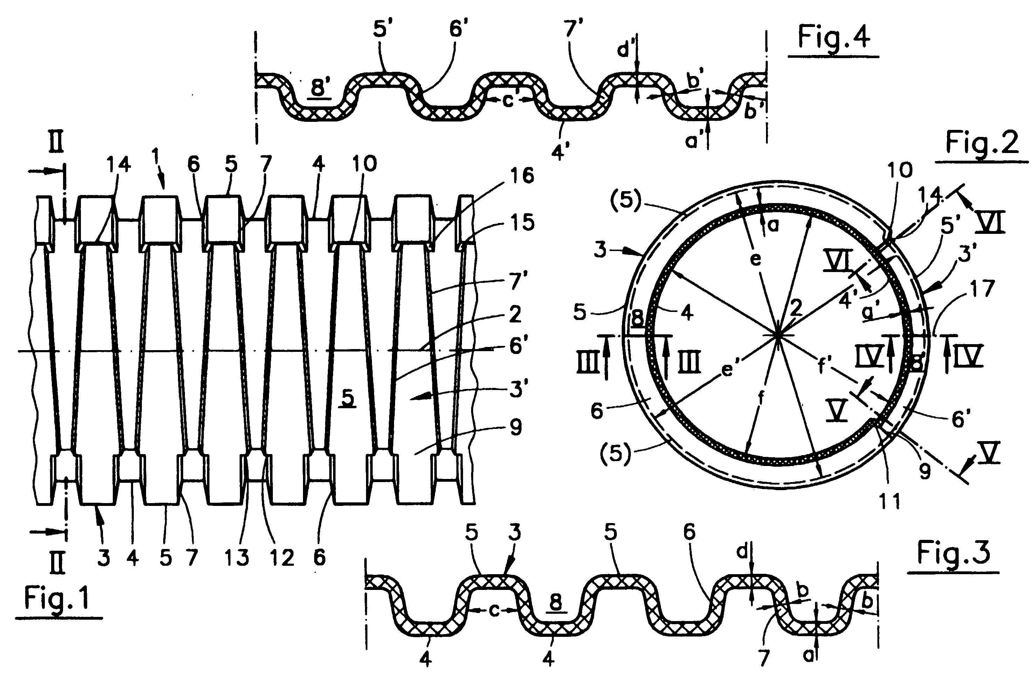

Das in den Fig. 1 bis 6 dargestellte Wellrohr 1 besteht aus einem bekannten thermoplastischen Kunststoff, beispielsweise Polyethylen, Polypropylen, Polyamid oder dergleichen. Es weist eine Mittel-Längs-Achse 2 auf, konzentrisch zu der das Wellrohr 1 mit gewellten Abschnitten 3 versehen ist, die sich etwa über Dreiviertel des Umfanges erstrecken, wie aus Fig. 2 hervorgeht. Diese gewellten Abschnitte 3 weisen konzentrisch zur Achse 2 verlaufende, im wesentlichen kreiszylindrische innere Rohrabschnitte 4 mit einer Wanddicke a und ebenfalls konzentrisch zur Achse 2 verlaufende, im wesentlichen kreiszylindrisch ausgebildete äußere Rohrbereiche 5 mit einer Wanddicke d auf. Ein innerer Rohrabschnitt 4 ist mit den benachbarten äußeren Rohrbereichen 5 jeweils mittels Flanken 6, 7 mit einer Wanddicke b verbunden. Die mit einem äußeren Rohrbereich 5 verbundenen Flanken 6, 7 sind von der Achse 2 aus radial nach außen gesehen leicht aufeinanderzu geneigt, so daß zwischen einem äußeren Rohrbereich 5 und den sich an diesen anschließenden Flanken 6, 7 ein - von der Achse 2 aus gesehen - radial nach außen gegenüber den inneren Rohrabschnitten 4 zurückgesetzter Hohlraum 8 ausgebildet ist, der im Querschnitt etwa die Form eines sich zum Rohrbereich 5 erweiternden Trapezes aufweist, wie aus Fig. 3 ersichtlich ist. Diese in Fig. 2 oben und unten und links dargestellte Ausgestaltung eines Wellrohres 1 ist allgemein bekannt und in der Praxis allgemein üblich.

Wie aus den Fig. 1, 2 und 4 hervorgeht, weist das Wellrohr 1 etwa über ein Viertel seines Umfanges gewellte Abschnitte 3' auf, die ebenfalls die inneren Rohrabschnitte 4 fortsetzende und über den Umfang schließende innere Rohrabschnitte 4', die äußeren Rohrbereiche 5 fortsetzende und über den Umfang schließende äußere Rohrbereiche 5' und die inneren Rohrabschnitte 4' mit den äußeren Rohrbereichen 5' verbindende Flanken 6' und 7' aufweisen. Der Querschnitt des im gewellten Abschnitt 3' ausgebildeten Hohlraumes 8' verändert sich über die Umfangserstreckung des gewellten Abschnittes 3'.

Die gewellten Abschnitte 3' weisen einen Anfang 9 auf, der in Fig. 1 und in Fig. 2 unten rechts dargestellt ist und der einem Ende des gewellten Abschnitts 3 entspricht. Der gewellte Abschnitt 3' weist weiterhin ein Ende 10 auf, das in Fig. 1 oben und in Fig. 2 oben rechts dargestellt ist und das dem anderen Ende des gewellten Abschnitts 3 entspricht. Wie aus den Fig. 1, 2 und 5 hervorgeht, setzt sich am Anfang 9 der äußere Rohrbereich 5 eines gewellten Abschnittes 3 stetig in den äußeren Rohrbereich 5' des gewellten Abschnittes 3' fort. Dagegen ist der innere Rohrabschnitt 4' gegenüber dem inneren Rohrabschnitt 4 um die Wanddicke a' des inneren Rohrabschnittes 4' radial zur Achse 2 nach außen versetzt. Die Flanken 6' und 7' des gewellten Abschnitts 3' sind gegenüber den Flanken 6, 7 des sich anschlieβenden gewellten Abschnitts 3 in Achsrichtung versetzt, und zwar etwa um die Wanddicke b' der Flanken 6', 7' in Richtung der Achse 2, so daß die mittlere axiale Erstreckung c' der jeweiligen Hohlräume 8' am Anfang 9 um etwa die doppelte Wanddicke b' größer ist als die mittlere axiale Erstreckung c der Hohlräume 8. Der innere Rohrabschnitt 4' geht in den inneren Rohrabschnitt 4 mittels eines Übergangsabschnittes 11 über; die Flanken 6' und 7' gehen in die Flanken 6 bzw. 7 mittels Übergangsabschnitten 12, 13 über.

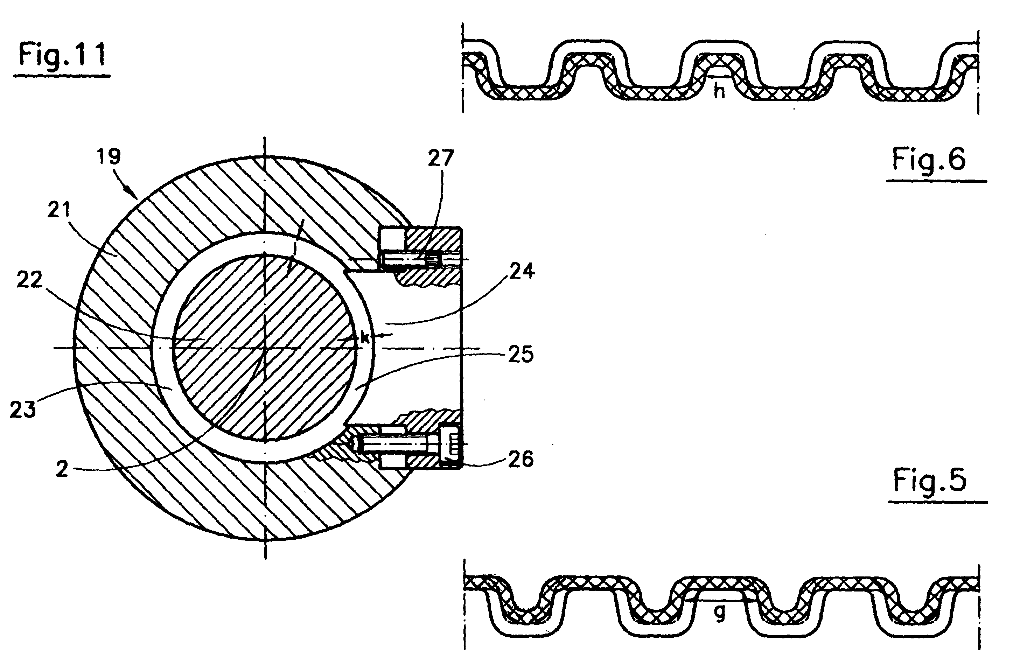

Am Ende 10 der gewellten Abschnitte 3' geht deren innerer Rohrabschnitt 4' stetig in den sich anschließenden inneren Rohrabschnitt 4 des sich anschließenden gewellten Abschnittes 3 über, wie den Fig. 2 und 6 entnehmbar ist. Dagegen springt der äußere Rohrbereich 5' gegenüber dem sich anschließenden Rohrbereich 5 radial nach innen zurück, und zwar etwa um die Wanddicke d' des äußeren Rohrbereiches 5'. Der Innendurchmesser des äußeren Rohrbereiches 5 nimmt also von einem Maß e, das auch dem Innendurchmesser des äußeren Rohrbereiches 5 entspricht, ab auf ein Maß e' am Ende 10, wobei gilt e' ≈ e - d'. Entsprechend nimmt - wie sich aus der obigen Beschreibung bereits ergibt - der Innendurchmesser des inneren Rohrabschnittes 4' vom Maß f am Ende 10, das dem Innendurchmesser der inneren Rohrabschnitte 4 entspricht, zu auf ein Maß f am Anfang 9, wobei gilt f' ≈ f + a'. Am Ende 10 geht der äußere Rohrbereich 5' mittels eines sich nach außen erstreckenden Übergangsabschnittes 14 in den sich anschließenden äußeren Rohrbereich 5 über. Weiterhin gehen die Flanken 6' und 7' mittels Übergangsabschnitten 15, 16 in die Flanken 6, 7 über. Am Übergangsabschnitt 11 hat der gewellte Abschnitt 3' eine innere axiale Erstreckung g, die größer ist als die axiale Erstreckung c des gewellten Abschnittes 3. Es gilt g ≈ c + 2b'. Entsprechend gilt für die innere axiale Erstreckung h des gewellten Abschnitts 3 und damit des gewellten Teil-Abschnitts 3"' am Übergangsbereich 14 h ≈ c - 2b'; die axiale Erstreckung h ist also kleiner als c. Die mittlere axiale Erstreckung c' ist der Mittelwert aus g + h.

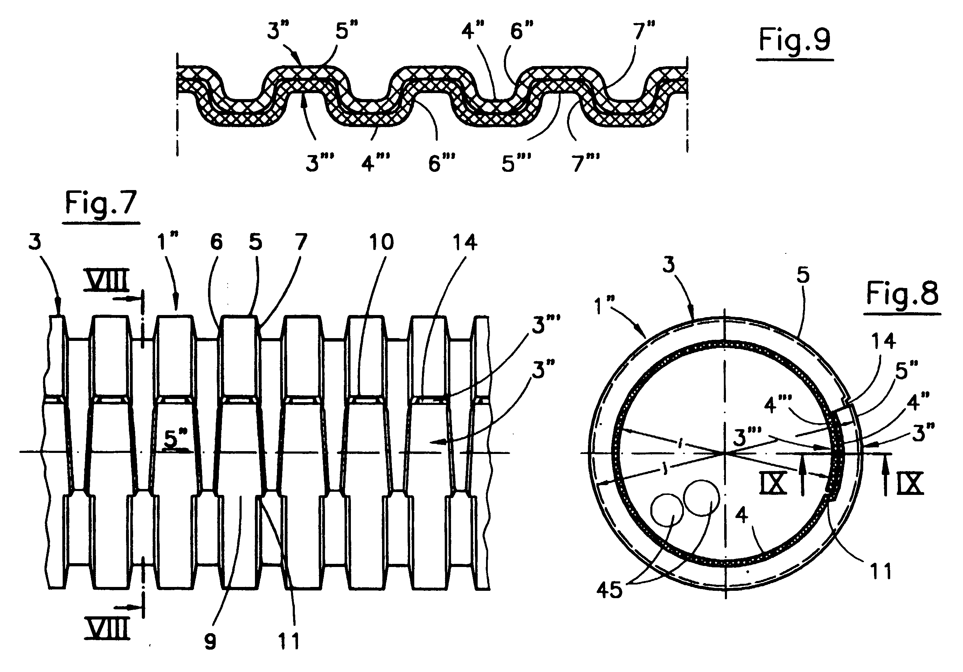

Wenn das Wellrohr 1 einseitig in der Mitte zwischen Anfang 9 und Ende 10 der gewellten Abschnitte 3' aufgeschnitten wird, und zwar in einer mit der Schnittlinie IV-IV in Fig. 2 zusammenfallenden Schnittebene 17, die auch durch die Achse 2 geht, dann werden jeweils aus einem gewellten Abschnitt 3' zwei gewellte Teil-Abschnitte 3'' und 3''' gebildet, wobei der gewellte Teil-Abschnitt 3" sich vom Anfang 9 bis zur Schnittebene 17 und der gewellte Teilabschnitt 3''' sich von der Schnittebene 17 bis zum Ende 10 erstrecken. Der gewellte Teilabschnitt 3'' weist entsprechend einen inneren Teil-Rohrabschnitt 4", einen äußeren Teil-Rohrbereich 5" und Teil-Flanken 6" und 7" auf. Der gewellte Teil-Abschnitt 3"' weist entsprechend einen inneren Teil-Rohrabschnitt 4"', einen äußeren Teil-Rohrbereich 5''' und Teil-Flanken 6"' und 7"' auf. Wenn - wie in den Fig. 7 bis 9 dargestellt - das in der Schnittebene 17 durchteilte Wellrohr 1 zusammengebogen wird, dann nimmt aufgrund der geschilderten Ausgestaltung der gewellten Abschnitte 3' der gewellte äußere Teil-Abschnitt 3'' den gewellten inneren Teil-Abschnitt 3''' auf, und zwar derart, daß die inneren Teil-Rohrabschnitte 4" und 4''', die äußeren Teil-Rohrbereiche 5'' und 5''' und die Teil-Flanken 6" und 6''' bzw. 7" und 7''' aneinanderliegen, wie es in Fig. 9 dargestellt ist. Weiterhin verläuft der innere Teil-Rohrabschnitt 4"' derart, daß er am Übergangsabschnitt 11 ohne gravierende Sprungstelle in den sich anschließenden inneren Rohrabschnitt 4 übergeht. Entsprechend weist der äußere Teilrohrbereich 5" am Übergangsabschnitt 14 keine gravierende radiale Sprungstelle gegenüber dem Teil-Rohrbereich 5 auf. Dieses Wellrohr 1" weist einen Innendurchmesser i der inneren Rohrabschnitte 4 bzw. des inneren Teil-Rohrabschnitts 4''' und einen Innendurchmesser j des äußeren Rohrbereiches 5 bzw. des äußeren Teil-Rohrbereiches 5"auf, die jeweils kleiner sind als die Innendurchmesser f bzw. f' und e bzw. e'. Dies ergibt sich aus dem Zusammenschieben des Wellrohres 1 zum Wellrohr 1'' im Bereich der gewellten Teil-Abschnitte 3" und 3'''.

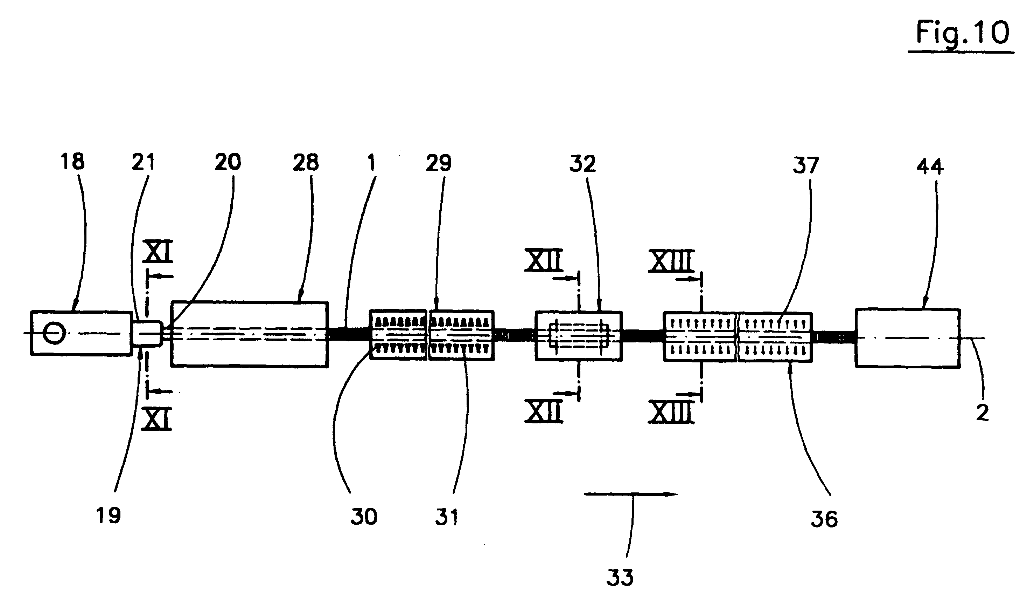

Die Herstellung des Wellrohres 1 und anschließend des Wellrohres 1'' erfolgt auf einer Anlage, die in Fig. 10 schematisch dargestellt ist. Eine solche Anlage weist einen Extruder 18 auf, aus dessen Rohrkopf 19 ein Schlauch 20 aus warmplastischem Kunststoff extrudiert wird.

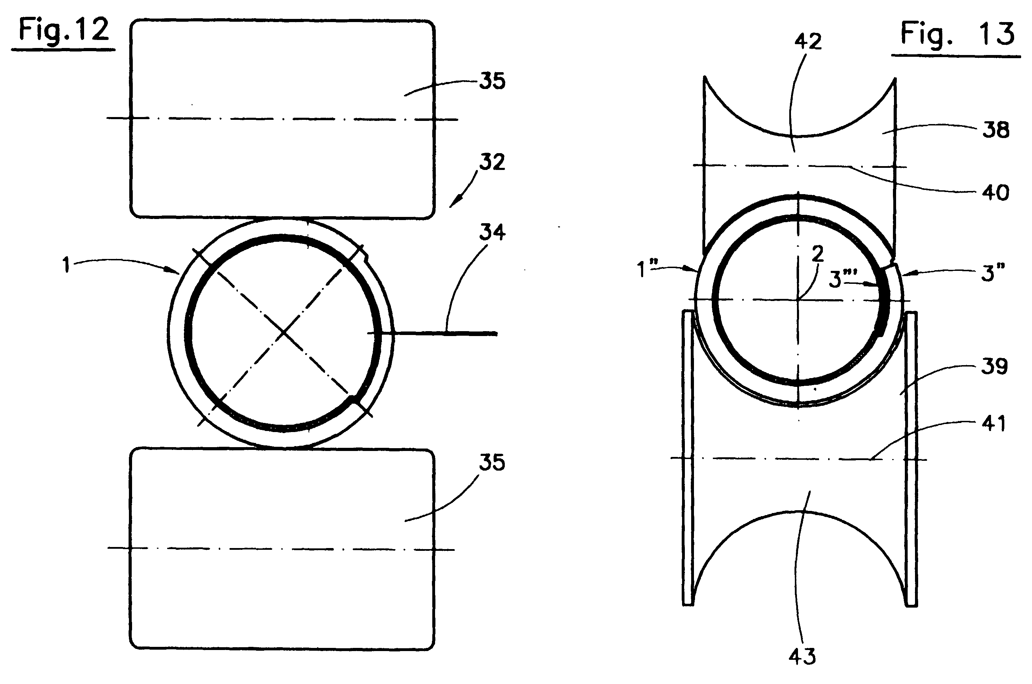

Der Rohrkopf 19 weist - wie aus Fig. 11 hervorgeht - eine Düse 21 mit einer mit der Achse 2 zusammenfallenden Achse und einen in der Düse 21 konzentrisch angeordneten Dorn 22 auf, wobei zwischen der Düse 21 und dem Dorn 22 ein Düsenspalt 23 gebildet wird, in dem der Schlauch 20 ausgeformt wird.

In der Düse 21 kann ein Schieber- bzw. Staubalken 24 angeordnet sein, der in den Düsenspalt 23 hineinschiebbar ist, so daß sich dort ein Bereich 25 gebildet wird, dessen radiale Erstreckung k radial zur Achse 2 kleiner ist als die radiale Erstreckung 1 des Düsenspaltes 23 in den übrigen Bereichen. In diesem Bereich 25 ist also der Düsenspalt 23 enger als im übrigen Bereich, so daß der aus dem Rohrkopf 19 in diesem Bereich extrudierte Schlauch 20 eine geringere Wanddicke aufweist als im übrigen Bereich. Der Schieber- bzw. Staubalken 24 wird mittels Schrauben 26 an der Düse 21 befestigt. Sein radialer Abstand von der Achse 2 und damit die Weite im Bereich 25 des Düsenspaltes 23 wird mittels Einstellschrauben 27 eingestellt. Anstelle durch einen Schieber- bzw. Staubalken 24 kann ein verengter Bereich 25 grundsätzlich auch durch eine unsymmetrische Anordnung der Düse 21 relativ zum Dorn 24 erreicht werden.

Der Schlauch 20 wird in einer nachgeordneten Formmaschine 28 nach dem sogenannten Vakuumverfahren oder dem sogenannten Blasverfahren oder einem kombinierten Vakuum-Blas-Verfahren zu dem Wellrohr 1 verformt. Derartige Formmaschinen 28 sind beispielsweise aus den deutschen Patenten 1 203 940 und 1 211 789 (entspr. GB-PS 971021) allgemein bekannt. Aus der Formmaschine 28 tritt das Wellrohr 1 aus, das bereits eigenstabil ist. Der im Bereich 25 der Extrusionsdüse 21 geformte Teil des Schlauches 20 wird zu dem Bereich des Wellrohres 1 verformt, der die gewellten Abschnitte 3' enthält.

Dieses Wellrohr 1 wird in einem nachgeordneten Kühlbad 29 mittels eines geeigneten Kühlmediums 30, das durch nur angedeutete Düsen 31 auf das Wellrohr 1 gerichtet wird, weiter abgekühlt. Hierbei kann es sich um Luft oder Wasser handeln. Derartige Kühlbäder 29 sind in der Praxis allgemein üblich und bekannt.

Dem Kühlbad 29 ist eine Band- oder Raupen-Abzugsvorrichtung 32 nachgeordnet, mittels derer das Wellrohr 1 in Produktionsrichtung 33 transportiert wird. Derartige Band- oder Raupen-Abzugsvorrichtungen 32 sind ebenfalls in der Praxis allgemein üblich und bekannt. In dieser Abzugsvorrichtung 32 ist auch noch eine Schneidvorrichtung vorgesehen.

Die Schneidvorrichtung besteht im wesentlichen aus einem Messer 34, mittels dessen das Wellrohr 1 in der Schnittebene 17 längsgeschlitzt wird. Da ansonsten die Band- und Raupen-Abzugsvorrichtung 32 allgemein bekannt und in der Praxis verbreitet ist, sind die Abzugsbänder 35 nur schematisch angedeutet.

Der Abzugsvorrichtung 32 ist eine Nachform-Vorrichtung 36 in Produktionsrichtung 33 nachgeordnet, in der Heizungen 37 vorgesehen sind, mittels derer das Wellrohr 1 auf eine zur thermischen Nachverformung geeigneten Temperatur erwärmt wird. In der Nachform-Vorrichtung 36 sind jeweils paarweise zueinander Verformungsrollen 38, 39 angeordnet, die quer zur Mittel-Längs-Achse 2 des Wellrohres 1 verlaufende Achsen 40, 41 aufweisen. Sie weisen weiterhin konkav, also nach innen zur jeweiligen Achse 40 bzw. 41 hin gewölbte Oberflächen 42, 43 auf, mittels derer das in der Schnittebene 17 geschlitzte Wellrohr 1 aus seiner in den Fig 1, 2 und 12 dargestellten ursprünglichen Form zum Wellrohr 1'' nach den Fig. 7 und 8 verformt wird, indem im wesentlichen die gewellten Abschnitte 3 zusammengedrückt werden, so daß die gewellten Teil-Abschnitte 3'' und 3''' ineinander gelangen, wie oben geschildert wurde. Das Wellrohr 1" wird anschließend auf einer üblichen Wickel-Vorrichtung 44 aufgewickelt.

Das fertige Wellrohr 1'', wie es in den Fig. 7 und 8 dargestellt ist, dient als Hüll-Wellrohr für elektrische Leitungen 45 oder dergleichen, von denen einige in Fig. 8 dargestellt sind. Die in ein solches Wellrohr 1" einzubringenden Leitungen 45 werden einschließlich der Steckverbindungen auf Montagebrettern vorpositioniert. Wenn alle Leitungen 45 vorpositioniert sind, dann wird das jeweilige Wellrohr 1" mittels entsprechender Montagehilfen im Bereich der gewellten Teil-Abschnitte 3'' und 3''' etwa radial zur Achse 2 aufgeklappt und über den Strang aus Leitungen 45 geschoben. Anschließend wird dann das Wellrohr 1'' aufgrund der elastischen Rückstellkräfte wieder geschlossen. Die Leitungen 45 sind in dem Wellrohr 1'' gegen Spritzwasser geschützt. Wegen der reduzierten Wanddicke a', b', d' im Bereich der gewellten Teil-Abschnitte 3" und 3''' hat das Welkohr 1'' keine oder nur eine sehr geringe Biege-Vorzugsrichtung. Weiterhin werden durch den bündigen Übergang des inneren Teil-Rohrabschnittes 4"' in den inneren Rohrabschnitt 4 gemäß der Darstellung in Fig. 8 scharfe Kanten an der Innenwand des Wellrohres 1" vermieden. Das Wellrohr 1" selber ist einteilig. Durch die gute Überlappung und den engen Kontakt ist auch ein nachträgliches Verschweißen der geschlitzten Wellrohre, z.B. durch Ultraschall, denkbar. Damit kann auch nach der Montage eine dauerhafte Fixierung erreicht werden, wobei nur eine Punkt-Verschweißung erfolgt. Voraussetzung ist naturgemäß, daß der verwendete Kunststoff schweißbar ist.

## Patentansprüche

1. Einteiliges Hüll-Wellrohr
- mit einer Mittel-Längs-Achse (2)
- mit in Richtung der Achse (2) hintereinander angeordneten, aneinander anschließenden und sich über mehr als die Hälfte ihres Umfanges erstrekkenden gewellten Abschnitten (3), die jeweils
-- einen äußeren Rohrbereich (5),
-- einen inneren Rohrabschnitt (4),
-- einen äußeren Rohrbereich (5) mit zwei in Richtung der Achse (2) benachbarten Rohrabschnitten (4) verbindende Flanken (6, 7) und
-- zwei einander zugewandte Enden (9, 10)
aufweisen
- mit je einem an jedem Ende (9, 10) eines gewellten Abschnitts (3) ausgebildeten gewellten Teil-Abschnitt (3", 3'''), der jeweils
-- einen äußeren Teil-Rohrbereich (5", 5'''),
-- einen inneren Teil-Rohrabschnitt (4", 4''') und
-- einen Teil-Rohrbereich (5'', 5''') mit zwei in Richtung der Achse (2) benachbarten Teil-Rohrabschnitten (4'', 4''') verbindende Teil-Flanken (6'', 6'''; 7'', 7'''),
aufweist, wobei
-- jeweils die beiden einem gewellten Abschnitt (3) zugeordneten gewellten Teil-Abschnitte (3'', 3''') radial zur Achse (2) übereinander angeordnet sind und ineinander greifen,
wobei der innere Teil-Rohrabschnitt (4''') des radial innen angeordneten gewellten Teil-Abschnitts (3''') am Übergang (11) des radial äußeren gewellten Teil-Abschnitts (3") in den gewellten Abschnitt (3) bündig an den inneren Rohrabschnitt (4) des gewellten Abschnitts (3) anschließt und wobei der innere Teil-Rohrabschnitt (4") des radial äußeren gewellten Teil-Abschnitts (3") am Übergang (11) zum gewellten Abschnitt (3) gegenüber dem inneren Rohrabschnitt (4) radial nach außen versetzt ist.

2. Hüll-Wellrohr nach Anspruch 1, wobei die Wanddicke (a', b', d') der gewellten Teil-Abschnitte (3'', 3''') kleiner ist als die Wanddicke (a, b, d) der gewellten Abschnitte (3).

3. Hüll-Wellrohr nach Anspruch 1 oder 2, wobei der radial außenliegende gewellte Teil-Abschnitt (3") am Übergang zum gewellten Abschnitt (3) seine größte Erstreckung in Richtung der Achse (2) aufweist und wobei der radial innen angeordnete gewellte Teil-Abschnitt (3''') am Übergang zum gewellten Abschnitt (3) seine geringste Erstreckung in Richtung der Achse (2) aufweist.

4. Hüll-Wellrohr nach einem der Ansprüche 1 bis 3, wobei der äußere Teil-Rohrbereich (5") des radial außen angeordneten gewellten Teil-Abschnitts (3") am Übergang (14) des radial inneren gewellten Teil-Abschnitts (3''') in den gewellten Abschnitt (3) bündig an den äußeren Rohrbereich (5) des gewellten Abschnitts (3) anschließt und wobei der äußere Teil-Rohrbereich (5'') des radial äußeren gewellten Teil-Abschnitts (3") am Übergang (14) zum gewellten Abschnitt (3) gegenüber dem äußeren Rohrbereich (5) radial nach innen versetzt ist.

5. Hüll-Wellrohr nach Anspruch 3, wobei der radial äußere gewellte Teil-Abschnitt (3'') am Übergang zum gewellten Abschnitt (3) eine größere innere Erstreckung (g) in Richtung der Achse (2) als der gewellte Teil-Abschnitt (3) hat und wobei der radial innere gewellte Teil-Abschnitt (3''') am Übergang zum gewellten Abschnitt (3) eine innere Erstreckung (h) in Richtung der Achse (2) hat, die kleiner ist als diejenige des gewellten Abschnitts (3).

6. Verfahren zur Herstellung eines einteiligen Hüll-Wellrohres nach einem der Ansprüche 1 bis 5 mit folgenden Merkmalen:
- es wird ein warmplastischer Schlauch (20) gebildet
- der Schlauch (20) wird zu einem über seinen Umfang geschlossenen Wellrohr (1) verformt, das einen durch gewellte Teil-Abschnitte (3'', 3''') gebildeten, gewellten Abschnitt (3') aufweist,
- das Wellrohr (1) wird unter Bildung der gewellten Teil-Abschnitte (3'', 3''') parallel zur Achse (2) in einer Schnittebene (17) durchtrennt und
- das Wellrohr (1) wird derart thermisch verformt, daß die beiden gewellten Teil-Abschnitte (3'', 3''') radial übereinander liegen und ineinander greifen.

7. Verfahren nach Anspruch 6, wobei der Schlauch (20) zur Bildung der gewellten Teil-Abschnitte (3", 3''') über einen Teil seines Umfanges mit reduzierter Wanddicke (a', b', d') gebildet wird.

## Claims

1. One-piece enveloping corrugated pipe, comprising
- a central longitudinal axis (2),
- corrugated sections (3), which are disposed one after the other in the direction of the axis (2), which are contiguous to each other and extend over more than half their periphery, each of which comprising
-- an outer pipe portion (5),
-- an inner pipe section (4),
-- flanks (6, 7), which connect an outer pipe portion (5) with two pipe sections (4) adjacent to each other in the direction of the axis (2), and
-- two ends (9, 10) turned towards each other,
- one corrugated partial section (3", 3''') at a time formed on each end (9, 10) of a corrugated section (3) and comprising
-- an outer partial pipe portion (5", 5'''),
-- an inner partial pipe section (4", 4"'), and
-- partial flanks (6", 6'''; 7", 7'''), which connect a partial pipe portion (5", 5"") with two partial pipe sections (4", 4"') adjacent to each other in the direction of the axis (2),
wherein
-- the two corrugated partial sections (3", 3''') allocated to a corrugated section (3) are disposed radially to the axis (2) one upon the other, engaging with each other, wherein the inner partial pipe section (4''') of the corrugated partial section (3''') disposed radially inwards is contiguous to, and flush with, the inner pipe section (4) of the corrugated section (3) at the transition (11) where the radially outer corrugated partial section (3") passes into the corrugated section (3), and wherein the inner partial pipe section (4") of the radially outer corrugated partial section (3") is displaced radially outwards relative to the inner pipe section (4) at the transition (11) into the corrugated section (3).

2. Enveloping corrugated pipe according to claim 1, wherein the wall thickness (a', b', d') of the corrugated partial sections (3'', 3''') is less than the wall thickness (a, b, d) of the corrugated sections (3).

3. Enveloping corrugated pipe according to claim 1, wherein the corrugated partial section (3") disposed radially outwards has its greatest extension in the direction of the axis (2) where it passes into the corrugated section (3), and wherein the corrugated partial section (3''') disposed radially inwards has its lowest extension in the direction of the axis (2) where it passes into the corrugated section (3).

4. Enveloping corrugated pipe according to claim 1, wherein the outer partial pipe portion (5") of the corrugated partial section (3") disposed radially outwards is contiguous to, and flush with, the outer pipe portion (5) of the corrugated section (3) at the transition (14) where the radially inner corrugated partial section (3''') passes into the corrugated section (3), and wherein the outer partial pipe section (5") of the radially outer corrugated partial section (3") is displaced radially inwards at the transition (14) to the corrugated section (3).

5. Enveloping corrugated pipe according to claim 3, wherein the radially outer corrugated partial section (3"), where passing into the corrugated section (3), has a greater extension (k) in the direction of the axis (2) than the corrugated partial section (3), and wherein the radially inner corrugated partial section (3"'), where passing into the corrugated section (3), has an inner extension (h) in the direction of the axis (2) which is smaller than that of the corrugated section (3).

6. Method for the manufacture of a one-piece enveloping corrugated pipe according to one of claims 1 to 5 comprising the following features:
- a thermally plastic tube (20) is formed
- the tube (20) is shaped into a corrugated pipe (1) which is closed over its periphery and which has a corrugated section (3') formed by corrugated partial sections (3", 3'''),
- the corrugated pipe (1) is cut through parallel to the axis (2) in a cutting plane (17) with the corrugated partial sections (3", 3''') forming, and
- the corrugated pipe (1) is thermally shaped such that the two corrugated partial sections (3", 3"') lie radially one upon the other and engage with each other.

7. Method according to claim 6, wherein for the production of the corrugated partial sections (3", 3'''), the tube (20) is formed to have a reduced wall thickness (a', b', d') over part of its periphery.

## Revendications

1. Tube ondulé de gaine en une seule pièce,
- avec un axe longitudinal médian (2),
- avec des tronçons ondulés (3) disposés les uns derrière des autres en direction de l'axe (2), se raccordant les uns aux autres, et s'étendant sur plus de la moitié de leur circonférence, comportant respectivement
-- une zone tubulaire extérieure (5),
-- un tronçon tubulaire intérieur (4),
-- une zone tubulaire extérieure (5) avec deux flancs (6, 7) reliant des tronçons tubulaires voisins (4) dans la direction de l'axe (2), et
-- deux extrémités (9, 10) orientées l'une vers l'autre,
- avec un tronçon ondulé partiel (3'', 3''') agencé sur chaque extrémité (9, 10) d'un tronçon ondulé (3), comportant respectivement
-- une zone tubulaire partielle extérieure (5'', 5'''),
-- un tronçon tubulaire partiel intérieur (4'', 4'''), et
-- une zone tubulaire partielle (5'', 5''') avec deux flancs partiels (6'', 6''' ; 7'', 7''') reliant des tronçons tubulaires partiels (4'', 4''') voisins dans la direction de l'axe (2),
-- les deux tronçons ondulés partiels (3'', 3''') associés à un tronçon ondulé (3) étant superposés radialement par rapport à l'axe (2) et s'engageant l'un dans l'autre, le tronçon tubulaire partiel intérieur (4''') du tronçon ondulé partiel (3''') disposé radialement à l'intérieur se raccordant de façon affleurée au tronçon tubulaire intérieur (4) du tronçon ondulé (3) au niveau de la transition (11) du tronçon ondulé partiel (3'') situé radialement à l'extérieur, et le tronçon tubulaire partiel intérieur (4'') du tronçon ondulé partiel (3'') situé radialement à l'extérieur étant décalé radialement vers l'extérieur par rapport au tronçon tubulaire intérieur (4) au niveau de la transition (11) vers le tronçon ondulé (3).

2. Tube ondulé de gaine selon la revendication 1, dans lequel l'épaisseur de paroi (a', b', d') des tronçons ondulés partiels (3'', 3''') est inférieure à l'épaisseur de paroi (a, b, d) des tronçons ondulés (3).

3. Tube ondulé de gaine selon la revendication 1 ou 2, dans lequel le tronçon ondulé partiel (3'') situé radialement à l'extérieur présente sa plus grande extension en direction de l'axe (2) au niveau de la transition vers le tronçon ondulé (3), et dans lequel le tronçon ondulé partiel (3''') disposé radialement à l'intérieur présente sa plus faible extension en direction de l'axe (2) au niveau de la transition vers le tronçon ondulé (3).

4. Tube ondulé de gaine selon l'une quelconque des revendications 1 à 3, dans lequel la zone tubulaire partielle extérieure (5'') du tronçon ondulé partiel (3'') disposé radialement à l'extérieur se raccorde de façon affleurée à la zone tubulaire extérieure (5) du tronçon ondulé (3) au niveau de la transition (14) du tronçon ondulé partiel (3''') disposé radialement à l'intérieur dans le tronçon ondulé (3), et dans lequel la zone tubulaire partielle extérieure (5'') du tronçon ondulé partiel (3'') situé radialement à l'extérieur est décalée radialement vers l'intérieur par rapport à la zone tubulaire extérieure (5) au niveau de la transition (14) vers le tronçon ondulé (3).

5. Tube ondulé de gaine selon la revendication 3, dans lequel le tronçon ondulé partiel (3'') situé radialement à l'extérieur présente au niveau de la transition vers le tronçon ondulé (3) une extension intérieure (g) en direction de l'axe (2) qui est plus importante que celle du tronçon ondulé (3), et dans lequel le tronçon ondulé partiel (3''') situé radialement à l'intérieur présente au niveau de la transition vers le tronçon ondulé (3) une extension intérieure (h) en direction de l'axe (2) qui est inférieure à celle du tronçon ondulé (3).

6. Procédé destiné à la fabrication d'un tube ondulé de gaine en une seule pièce selon l'une quelconque des revendications 1 à 5, présentant les particularités suivantes :
- il est formé un boyau (20) thermoplastique,
- le boyau (20) est transformé en un tube ondulé (1) fermé sur sa circonférence, qui comporte un tronçon ondulé (3') formé par des tronçons ondulés partiels (3'', 3'''),
- le tube ondulé (1) est découpé parallèlement à l'axe (2) dans un plan de coupe (17) afin de former les tronçons ondulés partiels (3'', 3'''), et
- le tube ondulé (1) est déformé thermiquement de telle sorte que les deux tronçons ondulés partiels (3'', 3''') soient radialement superposés et s'engagent l'un dans l'autre.

7. Procédé selon la revendication 6, dans lequel le boyau (20) est réalisé sur une partie de sa circonférence avec une épaisseur de paroi réduite (a', b', d') pour la formation des tronçons ondulés partiels (3'' 3''').
